# EUROPÄISCHE PATENTSCHRIFT

(11) **EP 1 052 370 B1**
(45) Veröffentlichungstag und Bekanntmachung des Hinweises auf die Patenterteilung: **28.07.2004**
(21) Anmeldenummer: 00109113.1
(22) Anmeldetag: 04.05.2000
(51) Int. Cl.: F01D 5/00, B23P 6/00

(54) **Verfahren zur Fertigung angepasster, strömungstechnischer Oberflächen**
Method of manufacturing streamlined aerodynamics surfaces
Procédé pour la fabrication des surfaces aérodynamiques raccordées

(30) Priorität: 12.05.1999 DE 19922012
(43) Veröffentlichungstag der Anmeldung: 15.11.2000
(73) Patentinhaber: MTU Aero Engines GmbH, 80995 München (DE)
(72) Erfinder: Metzinger, Peter, 80807 München (DE); Stelzer, Rupert, 82256 Fürstenfeldbruck (DE); Haimerl, Reimund, 84048 Mainburg (DE); Muschal, Georg, 85435 Erding (DE); Glaesser, Arndt, 85221 Dachau (DE)
(74) Vertreter: Einsele, Rolf W.

(56) Entgegenhaltungen:
- EP-A- 0 389 913
- EP-A- 0 837 220
- US-A- 4 883 216
- US-A- 4 998 005
- US-A- 5 285 572

## Beschreibung

Die Erfindung betrifft ein Verfahren zur Fertigung angepaßter, strömungstechnischer Oberflächen an integral beschaufelten Rotoreinheiten, gemäß dem Oberbegriff des Patentanspruches 1.

Integral beschaufelte Rotoreinheiten, deren Schaufel z.B. durch Schweißen, Schmi e-den, Löten oder Kleben stoffschlüssig und spielfrei mit der Nabe verbunden sind, bieten in der Regel Vorteile hinsichtlich Festigkeit, Gewicht und Bauvolumen und werden deshalb zunehmend in fortschrittliche Turbomaschinenkonstruktionen einbezogen. In diesem Zusammenhang geht es primär um den Ersatz der allgemein übl i-chen, formschlüssigen Laufschaufelbefestigung (z.B. mit Tannenbaum- bzw. Schwalbenschwanzprofilen) bei Rotoren mit im wesentlichen axialer Durchströmung. Sowohl die Schaufelbefestigung/ -installation als auch die Schaufelreparatur/ der -austausch sind bei integral beschaufelten Rotoren zugegebenermaßen aufwendiger und schwieriger als bei den formschlüssigen Bauweisen. Es sind modifizierte bzw. neuartige Fertigungs- und Reparaturverfahren erforderlich, von denen das lineare Reibschweißen ein besonders markantes und wichtiges Beispiel darstellt. Trotz se i-ner Bezeichnung ist dieses Fügeverfahren metallurgisch eher dem Schmieden als dem Schweißen zuzuordnen. Ein weiteres, aktuelles Fügeverfahren ist das Induktionsschweißen, bei dem nach elektroinduktiver Erwärmung durch Fügedruck ebenfalls ein feinkörniges "Schmiedegefüge" erzeugt wird.

Löt- und Klebeverfahren sind prinzipiell ebenfalls möglich, wobei die Fügezone aber thermisch/mechanisch zumeist eine Schwachstelle" bildet.

Die aktuellen Fügeverfahren erfordern durchweg, daß zumindest eines der zu füge n-den Bauteile im Bereich der Fügezone Aufmaß besitzt. Dieses Erfordernis kann sich durch die Art der Bauteileinspannung und Krafteinleitung ergeben, wie beim linearen Reibschweißen, bzw. durch das Kriterium, daß die Fügezone allseitig nacharbeitbar sein soll, insbesondere um geometrische Fügefehler auszugleichen. Beim Fügevorgang selbst tritt in der Regel Material aus (z.B. "Flash" beim Reibschweißen), welches anschließend ebenfalls entfernt werden muß. In jedem Fall wird zumindest der Bereich der Fügezone durch Abtragen von Material in seiner Oberflächengestalt nachgearbeitet und optimiert, wobei strömungs- und festigkeitstechnische Gesichtspunkte zu beachten sind. Die zu fertigenden Oberflächen sind zudem an vorhandene Istoberflächen anzupassen, wofür letztere meßtechnisch erfaßt werden müssen. Im Sinne einer modernen, effizienten Fertigung werden die Meßwerte datentechnisch gespeichert, die zu fertigenden Oberflächen räumlich berechnet und durch maschinelles Abtragen geformt, wobei alle drei Schritte "Messen", "Berechnen" und "Fertigen" auf einer zusammenhängenden Datenverarbeitung basieren.

Aus der europäischen Offenlegungsschrift EP 0 837 220 A2 ist ein Verfahren zur Instandsetzung verschlissener Schaufelspitzen von Verdichter- und Turbinenschaufeln bekannt, bei welchem die verschlissene Schaufelspitze in einer definierten, radialen Höhe h abgetrennt und durch ein konturmäßig exakt angepaßtes Reparaturprofil ersetzt wird, dessen Befestigung durch Löten oder Schweißen erfolgt. Nach Abtrennen des verschlissenen Bereiches wird die Ist-Geometrie des Restschaufelblattes im Bereich der Trennebene - und somit der späteren Fügeebene - gemessen, und nach diesen Meßdaten ein exakt angepaßtes Reparaturprofil gefertigt, vorzug s-weise durch Laserstrahlschneiden unter dreidimensionaler Schnittführung. Dabei wird die Oberfläche des Restschaufelblattes ab der Trenn-/Fügeebene mit dem R e-paraturprofil in radialer Richtung bis zur Blattspitze allseitig tangential geradlinig fortgesetzt. Eine Nacharbeit ist, falls überhaupt, nur an der Lötfuge bzw. an der Schweißnaht erforderlich. Abgesehen vom Vorteil minimaler Nacharbeit hat dieses Verfahren auch den Vorteil, daß die Schaufel nach lokaler Reparatur weiterverwendet werden kann und nicht ersetzt werden muß. Dieses Verfahren, welches eine spezielle Form des Patchens" darstellt, eignet sich auch für integral beschaufelte Rotoreinheiten, allerdings nur für Reparaturen im Bereich der Schaufelspitzen. Verfahrensbedingt sind nur angepaßte Oberflächen herstellbar, deren Mantellinien - in Höhenrichtung - gerade sind (Schneiden mit geradem Laserstrahl), also keine beliebig räumlich gekrümmten Oberflächen wie beispielsweise am Übergang vom Schaufelblatt zur Nabe. Die Oberflächengestaltung des Reparaturteils durch Laser auf Fertigmaß muß vor dessen Befestigung am Restschaufelblatt erfolgen, so daß geometrische Fügefehler kaum mehr ausgeglichen werden können (kein abarbeitbares Übermaß vorhanden). Ein Bearbeiten des Reparaturteiles / Patch auf Fertigmaß durch Laserstrahlschneiden nach dem Fügen ist nicht möglich, weil der von der Blattspitze i.w. radial nach innen schneidende Laserstrahl zumindest stellenweise in das Restschaufelblatt eindringen und dieses beschädigen würde.

Die Offenlegungsschrift US 5 285 572 behandelt ein Verfahren zur Überholung einer beschaufelten Einheiteiner Turbine nach dem Stand der Technik.

Die deutsche Offenlegungsschrift DE 40 14 808 A1 behandelt ein Maschinensichtsystem/Visionssystem zum Automatisieren eines maschinellen Bearbeitungsverfahrens. Das System soll konkret für die Instandsetzung verschlissener Turbinenschaufelspitzen durch Laser-Pulver-Auftragschweißen verwendet werden. Die Schaufelspitzen zeigen eine spezielle Geometrie, bei der die dünne, das Profil umschreibende Schaufelwand radial über die eigentliche Stirnfläche vorsteht. Bei einem Anstreifen am Turbinengehäuse bzw. einem Gehäusebelag unterliegt die vorstehende Schaufelwand einem Verschleiß, der durch Auftragschweißen beseitigt werden kann. Zunächst wird die verschlissene Schaufelwand-Stirnkante überschliffen, d.h. eingeebnet und geglättet. Die von der Stirnkante gebildete, profilierte Ringfläche wird mittels Kamera optoelektronisch erfasst und in eine mathematische Ringkurve mit örtlich definierter Dicke (Breite) umgerechnet. Die Daten werden direkt zur Steuerung des Schweißverfahrens verwendet, wobei der lokale Materialauftrag (Pulverstrom, Laserintensität) an die jeweilige Restwanddicke angepasst wird. De facto werden somit eine äußere und eine innere Istkontur mit zumindest annähernd ebener Stirnfläche durch Materialauftrag fortgesetzt, wobei sicher eine gewisse Nachbearbeitung erforderlich ist.

Der Artikel "Kompressor- und Turbinenschaufeln automatisch reparieren" auf den Seiten 672-674 der deutschen Zeitschrift **Werkstatt und Betrieb** 129 (1996) beschreibt die Reparatur von Schaufelspitzen und -kanten durch Aufschweißen. Dabei wird die räumliche Istkontur der jeweiligen Schaufel nahe der Schweißraupe in mehreren Schnitten abgetastet und gespeichert. Die Istkontur wird rechnerisch in den Aufschweißbereich hinein fortgesetzt und mittels NC-Bearbeitung gefertigt. Dabei können auch Sondergeometrien an der Schaufelspitze, z.B. gekrümmte oder geknickte Mantellinien, berücksichtigt werden. Eine solche Sondergeometrie wird beispielsweise an einer Masterschaufel abgetastet und gespeichert. Auf einen "intelligenten" Abgleich zwischen fehlerbehafteten Istgeometrien und Mastergeometrien wird ebenfalls hingewiesen. Dennoch erhält der Fachmann keine konkreten Hinweise, wie ein solcher Abgleich erfolgen sollte.

Bei integral beschaufelten Rotoreinheiten kann sich der geometrische Bereich für die Fertigung angepaßter Oberflächen über die gesamte Ringraumhöhe, d.h. von der Nabe bis zu den Schaufelspitzen, erstrecken. Der zeitlich gesehen erste Anwendungsfall ist hierbei die Neuteilfertigung, im Rahmen derer die - vorzugsweise großteils fertigbearbeiteten - Schaufeln fügetechnisch mit der Nabe verbunden werden, und zumindest im Bereich der nabennahen Fügezonen angepaßte Oberflächen abtragend geformt werden.

Im Betrieb der Rotoren können Verschleißerscheinungen und Beschädigungen auftreten, die der Reparatur bedürfen. Im schlimmsten Fall sind ganze Schaufeln zu ersetzen, häufiger nur mehr oder weniger große Schaufelteile/-bereiche. Ammeisten betroffen sind naturgemäß die Ein- und Austrittskanten sowie die Spitzen der Schaufeln. Die beschädigten Bereiche werden abgetrennt, z.B. mittels Laserstrahlschneiden, und durch Teile/Patches mit Aufmaß ersetzt. Falls die Beschädigungen nur wenig in den Schaufelwerkstoff reichen, kann ein bloßer Materialauftrag mit Übermaß, z.B. mittels Laserpulver-Auftragschweißen, genügen, so daß keine eigentlichen Ersatzteile erforderlich sind. In der Praxis werden oft Kombinationen aus den Maßnahmen "Schaufelersatz", "Schaufelteilersatz/Patchen" und "Materialauftrag" sinnvoll sein, da in längeren Betriebsphasen unterschiedliche Schadensarten auftreten können.

Ausgehend von dieser Situation besteht die Aufgabe der Erfindung darin, ein Verfahren zur Fertigung angepaßter, strömungstechnischer Oberflächen an integral beschaufelten Rotoreinheiten anzugeben, welches gleichermaßen für Neuteilfertigung und Reparatur geeignet ist, welches auf die gesamte Schaufeloberfläche - einschließlich ihres Überganges zur Nabe - bis in unmittelbare Nähe der Nabe anwendbar ist, welches - unter Beachtung von Mindestkrümmungen - die Erzeugung beliebig gekrümmter, stufen- und knickfreier Oberflächen gestattet, welches verschiedene Arten des Materialabtrages sowie des vorhergehenden Fügens bzw. Materialauftragens zuläßt und welches besonders präzise, schnell und kosteneffizient arbeitet.

Diese Aufgabe wird durch die in Anspruch 1 gekennzeichnete Merkmalskombination gelöst, in Verbindung mit den gattungsbildenden Merkmalen in dessen Oberbegriff.

Nach Merkmal A erfolgen die meßtechnische Erfassung und die Fertigung auf einer Bearbeitungsmaschine bei gleichbleibender Aufspannung der Rotoreinheit in einem Zyklus. Hierdurch wird die Verfahrenspräzision erhöht, die Verfahrensdauer wird verkürzt.

Aufgrund von Merkmal B kennt" die Bearbeitungsmaschine die Solloberfläche jedes zu bearbeitenden Bereiches und somit die optimale, anzustrebende Bauteilgestalt. Nach Merkmal C werden die meßtechnischen Istdaten und die vorgegebenen Solldaten systematisch zunächst in eine rechnerische, räumliche Fläche, anschließend in eine real gefertigte Bauteiloberfläche umgesetzt, wobei die Untermerkmale a bis c die Einzelheiten definieren. Untermerkmal a definiert den Übergangsmodus zwischen der zu fertigenden Oberfläche und einer Istoberfläche bzw. einer sogenannten Reparaturoberfläche, welche allseitig innerhalb einer Istoberfläche im Bauteil festgelegt und gefertigt wird. Untermerkmal b definiert die Rahmenmerkmale der zu fertigenden Oberfläche, wobei die mathematisch/theoretische Vorgabe in der Praxis fertigungstechnisch bestmöglich, d.h. so gut es mit vertretbarem Aufwand geht, umgesetzt wird.

Untermerkmal c berücksichtigt die Fälle, in denen die Solloberfläche (Sollprofile in Sollage) nicht oder nicht vollständig herstellbar ist und priorisiert das Sollprofil gegenüber der Sollage.

Es ist dem Fachmann klar, daß reale, maschinelle Fertigungsvorgänge hard- und softwarebedingt zu Abweichungen gegenüber den theoretisch/mathematischen Vorgaben führen können und häufig auch führen. Mit zuverlässigen und präzisen Fertigungstechnologien lassen sich solche Abweichungen aber minimieren und in tolerierbaren, strömungs- und festigkeitstechnisch unbedenklichen Größenordnungen halten. Beispielsweise können auf maschinell gefertigten Oberflächen minimale Stufen, Rillen und Knicke tolerierbar sein, obwohl an diesen Stellen theoretisch ein mathematisch stetiger, glatter Flächenverlauf vorgegeben wurde.

In den Unteransprüchen sind bevorzugte Ausgestaltungen des Verfahrens nach dem Hauptanspruch gekennzeichnet.

Die Erfindung wird anschließend anhand der Zeichnungen noch näher erläutert. Dabei zeigen in stark vereinfachter, nicht maßstäblicher Darstellung:
Figur 1 einen Teilquerschnitt durch eine Rotoreinheit mit einer von mehreren Schaufeln, deren Gestalt vor dem Fügen bereits großteils fertigbearbeitet worden ist,
Figur 2 einen vergleichbaren Teilquerschnitt mit einem Übermaß-Austauschteil, aus dem die Schaufel herausgearbeitet wird,
Figur 3 eine Seitenansicht einer "gepatchten" Schaufel,
Figur 4 einen Längsschnitt gemäß dem Schnittverlauf A-A in Figur 3,
Figur 5 den Spitzenbereich einer Schaufel mit Materialauftrag.

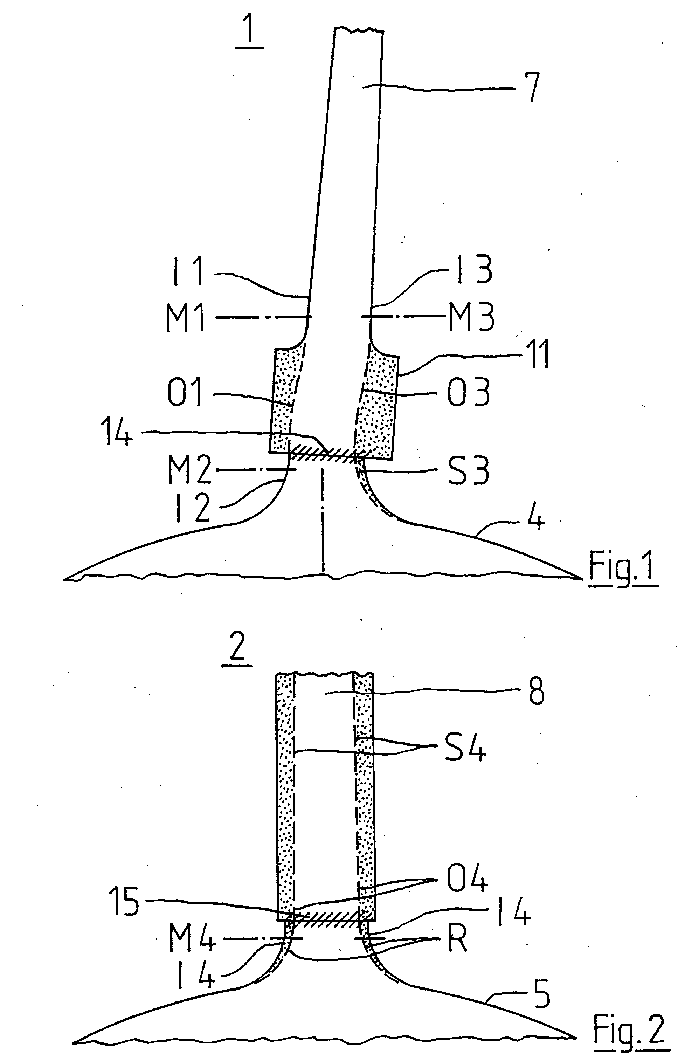

Von der integral beschaufelten Rotoreinheit 1 in Figur 1 sind die Nabe 4 - ansatzweise - und ein Teil der Schaufel 7 zu erkennen. Die Schaufel 7 wurde vorzugsweise durch lineares Reibschweißen an einer höckerartigen Erhebung der Nabe 4 befestigt und weist zum Zweck der Manipulation und Krafteinleitung eine Aufdickung 11 am radial inneren, unteren Ende auf. Die Fügezone 14 ist mit einer Schraffur verdeutlicht. Durch die bewußt übertriebene Darstellung ist gut zu erkennen, daß die Schaufel 7 geometrisch fehlerhaft befestigt wurde. Es liegen - beispielhaft - sowohl ein seitlicher Versatz zur Nabe 4 nach rechts als auch ein Winkelfehler, nämlich eine Neigung nach rechts abweichend von der Radialrichtung, vor.

Figur 1 zeigt eine Situation, die im Rahmen der Neuteilfertigung und im Rahmen einer Reparatur auftreten kann, wobei die aus Buchstaben und Ziffern zusammengesetzten Bezugszeichen auf der linken Schaufelseite sich auf einen Reparaturfall, die zusammengesetzten Bezugszeichen auf der rechten Seite sich auf die Neuteilfertigung beziehen sollen.

Die Oberfläche der Schaufel 7 soll vor dem Fügen bereits weitgehend fertiggestellt sein, z.B. durch Feinschmieden, und stellt somit eine Istoberfläche I 1 bzw. I 3 dar, welche als Bezugsfläche nicht mehr verändert bzw. beschädigt werden darf. Wenig oberhalb der Aufdickung 11 wird diese Istoberfläche meßtechnisch erfaßt, wobei die Bezugszeichen M 1 und M 3 - mit strichpunktierter Lageangabe - für Meßzonen stehen, welche die Istoberfläche bereichsweise flächig erfassen, um den Profilverlauf in Längs- und Querrichtung und die Profiländerung in Radialrichtung zu bestimmen. Eine Meßzone ist also keine Linie, z.B. um das Profil herum in einer radialen Höhe, sondern stets ein flächiger Bereich. Insofern deuten die strichpunktierten Linien nur die ungefähre, mittlere Höhenlage der Meßzonen M 1 bis M 3 an.

Im Reparaturfall (linke Seite) wird auch die Istoberfläche I 2 zwischen Fügezone 14 und Nabe 4 im Bereich der Meßzone M 2 erfaßt.

Zwischen den Istoberflächen I 1, I 2 wird eine diese verbindende, angepaßte Oberfläche O 1 gefertigt, welche stufenlos und knickfrei in die Istoberflächen übergeht und selbst stufenlos und knickfrei sowie bestmöglich mathematisch stetig ist unter Beachtung örtlich und richtungsabhängig variabel vorgebbarer Mindestkrümmungen. Dabei gilt ggf. das Motto" Sollprofil vor Sollage. Die erfindungsgemäßen Fertigungskriterien sowie die geometrischen Fügefehler führen hier in radialer Richtung zu einem sanft S-förmig geschwungenen Verlauf der Oberfläche 0 1, wobei das zu entfernende, überschüssige Material gepunktet wiedergegeben ist.

Die Verhältnisse bei der Neuteilfertigung (rechte Seite) sind ähnlich. Allerdings wird hier nur in einer Zone M 3 oberhalb der Aufdickung 11 gemessen. Die höckerartige Erhebung auf der Nabe 4 soll im Neuzustand Übermaß aufweisen, so daß die angepaßte Oberfläche O 3 von der oberen Istfläche I 3 ausgehend nach unten in die Solloberfläche S 3 übergeht, welche dabei ebenfalls erst gefertigt wird. In welcher radialen Höhe die angepaßte Oberfläche O 3 in die Solloberfläche S 3 übergeht, kann man nicht pauschal sagen, die Erfindung hat jedoch die Tendenz, Übergangsbereiche mit Abweichung vom Soll möglichst kurz bzw. klein zu gestalten, unter Beachtung von Mindestkrümmungen.

Figur 2 zeigt einen Reparaturfall einer Rotoreinheit 2, bei dem praktisch eine komplette Schaufel durch ein Übermaßteil ersetzt wurde. Meßtechnisch erfaßt wird hier die Istkontur I 4 zwischen Fügezone 15 und Nabe 5 in einer Meßzone M 4 rund um das Höckerprofil". Allseitig mit Abstand zur gemessenen Istoberfläche I 4 wird im Bauteil eine sogenannte Reparaturoberfläche R definiert. Die Fertigung der angepaßten Oberfläche O 4 geht von besagter Reparaturoberfläche R aus und schafft auf möglichst geringer, radialer Höhe einen Übergang in die Solloberfläche S 4, welche nach oben bis zur - nicht dargestellten - Schaufelspitze fortgesetzt wird. Die Reparaturoberfläche R wird ebenfalls in diesem Zyklus gefertigt, egal ob zeitlich vor oder nach der Oberfläche O 4. Hier werden also drei Arten" von Oberflächen gefertigt (O 4, R, S 4), wobei O 4 die angepaßte Oberfläche darstellt. Alle Oberflächen zusammen bilden die Gestalt der eigentlichen Schaufel 8, wobei hier relativ viel Überschußmaterial abzuarbeiten ist. Dem steht der Vorteil gegenüber, daß die erzeugte Schaufel 8 weitestgehend dem Soll entspricht, d.h. sehr präzise ist.

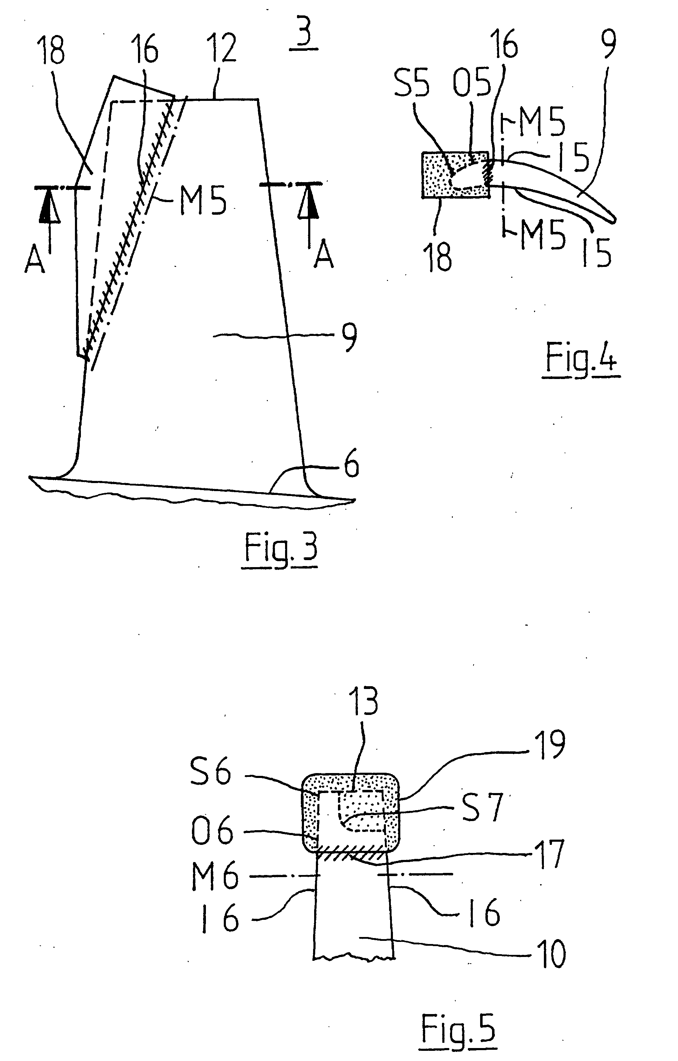

Die Figuren 3 und 4 betreffen das sogenannte Patchen, d.h. den Schaufelteilersatz mit Austauschteilen, welche i.a. allseitig Übermaß aufweisen. Figur 3 zeigt eine Schaufel 9 - hier eine Turbinenschaufel - einer Rotoreinheit 3 in Seitenansicht mit Blick in Umfangsrichtung, wobei die Nabe 6 noch ansatzweise zu erkennen ist. Die Eintrittskante der Schaufel 9 wurde über einen Großteil ihrer radialen Höhe bis hin zur Schaufelspitze 12 durch einen ebenen, nach rechts oben geneigten Schnitt abgetrennt und durch einen angeschweißten Patch 18 ersetzt, welcher der Schaufelgestalt in seiner Form mehr oder weniger grob und allseitig mit Übermaß angenähert ist und beispielsweise aus einer rechteckigen Stange oder einem dicken Blech herausgeschnitten sein kann. Die Fügezone 16 ist durch eine Schraffur verdeutlicht. Figur 4 zeigt einen Axial-/Tangentialschnitt gemäß dem Verlauf A-A in Figur 3, in dem das Schaufelprofil erkennbar ist. Der rechts von der Fügezone 16 liegende Teil der Schaufel 9 ist in seiner Gestalt vorgegeben und wird nicht verändert. Seine Istoberfläche I 5 wird beiderseits des Profils in der Meßzone M 5 nahe der Fügezone 16 erfaßt, um den zu fertigenden Profilbereich - von der Fügezone 16 nach links - anpassen zu können. Die angepaßte Oberfläche O 5 sollte auf kürzestmöglichem Weg in die Solloberfläche S 5, d.h. das Sollprofil in Sollage, übergehen, was nicht immer möglich ist. Zumindest wird die angepaßte Oberfläche bestmöglich der Solloberfläche angenähert, wobei die Anpassung an das Sollprofil, d.h. die Sollform, wichtiger ist als die Anpassung an die Sollage (Sollprofil vor Sollage"). Ein Patchen nach Art von Figur 3 und 4 ist prinzipiell an jeder Stelle einer Schaufel möglich, wobei der Patch auch mitten in der Schaufel sitzen kann, z.B. als Scheibe in einem entsprechenden Loch in der Schaufel. Somit ist klar, daß die Fügezone auch gekrümmt, vorzugsweise teilkreisförmig, und in sich geschlossen sein kann, z.B. als Vollkreis. Dabei ist ein Patch stets ein Austauschteil mit definierter Gestalt sowie mit zumindest lokalem Übermaß zur Behebung von Schaufelschäden mit größerer volumetrischer Erstreckung.

Demgegenüber gibt es Schadensformen, bei welchen das Schaufelmaterial vorwiegend im Oberflächenbereich angegriffen wird, z.B. durch mechanisches Anstreifen an Statorteilen, durch erosive Partikel im Gasstrom oder durch die korrosiven Heißgase selbst. Hier kann es günstiger sein, nach abtragender "Glättung" der geschädigten Bauteiloberfläche fehlendes Material "formlos" aufzutragen, insbesondere in geschmolzenem Zustand durch Schweißen bzw. Löten. Ein vielversprechendes Fertigungsverfahren mit relativ geringer Wärmebelastung für das Bauteil ist in diesem Zusammenhang das Laser-Pulver-Auftragsschweißen.

Figur 5 zeigt das Reparieren durch Materialauftrag am Beispiel einer Schaufel 10 mit zu erneuernder Spitze 13. Man erkennt den Materialauftrag 19, welcher sowohl seitlich als auch nach oben Übermaß aufweist. Die Darstellung soll einem Teilquerschnitt durch die Schaufel mit Blickrichtung parallel zur Rotorachse entsprechen. Die schraffierte Fügezone 17 am oberen Ende der gekürzten Schaufel 10 müßte sich, genau genommen, auf den gesamten Querschnitt des Materialauftrags 19 erstrekken, da dieser im ganzen schweißtechnisch aufgebracht ist. Um andere Details innerhalb des Materialauftrags 19 noch deutlich erkennen zu können, wurde auf eine weitergehende Schraffur verzichtet. Unterhalb der Fügezone 17 wird die Istoberfläche I 6 in der Meßzone M 6 rund um das Schaufelprofil erfaßt und datentechnisch verarbeitet. Es wird eine angepaßte Oberfläche 0 6 gefertigt, welche in die Solloberfläche S 6 übergeht bzw. an letztere bestmöglich angepaßt ist (auch hier: "Sollprofil vor Sollage"). Eine besonders einfache Möglichkeit zur Fertigung einer angepaßten Oberfläche bestünde darin, die Istoberfläche, hier I 6, an jeder Stelle rund um das Profil nach oben zur Schaufelspitze 13 hin tangential geradlinig zu verlängern, d.h. mathematisch gesehen in Höhenrichtung die Mindestkrümmung "unendlich" (∞) vorzugeben. Dies dürfte dann sinnvoll sein, wenn die radiale Höhe des Materialauftrags sehr gering ist, d.h. ein Übergang in Richtung Solloberfläche bzw. Sollprofil praktisch nicht möglich ist. Dabei spielt es auch eine Rolle, wie stark die lstoberfläche nahe der Fügezone von der Solloberfläche abweicht.

In Figur 5 ist eine zusätzliche Solloberfläche S 7 kurz gestrichelt wiedergegeben, welche in Relation zu S 6 zu einem zusätzlichen, definierten Materialabtrag (weniger stark gepunktet) führt. Dies ist als Hinweis auf Schaufeln gedacht, welche zur Spitze hin eine stufenartige Profiländerung aufweisen, durch die das "Tropfenprofil" in ein sehr dünnes Profil mit über die Länge weitgehend konstanter Dicke und mit der Schaufelsaugseite entsprechender Krümmung übergeht.

## Patentansprüche

1. Verfahren zur Fertigung angepaßter, strömungstechnischer Oberflächen an integral beschaufelten Rotoreinheiten, bevorzugt in Axialbauart, mit einer Nabe und mit mindestens einem Schaufelkranz, durch maschinelles Abtragen nach stoffschlüssigem Zusammenfügen mindestens einer Schaufel und der Nabe und/oder mindestens eines Schaufelteiles und wenigstens einer Schaufel und/oder nach stoffschlüssigem, örtlichem Materialauftrag, wobei jeweils mindestens eines dieser Teile bzw. der Materialauftrag im ganzen oder örtlich im Bereich der Fügezone vor dem Abtragen mit Aufmaß versehen ist, insbesondere im Rahmen der Neuteilfertigung und der Reparatur von sogenannten Blisks (Bladed Disks) und Blings (Bladed Rings) für Gasturbinen, wobei mindestens eine die örtliche Bauteilgestalt beschreibende Istoberfläche meßtechnisch erfaßt wird, und eine auch die Fügezone strömungs- und festigkeitstechnisch günstig gestaltende, an die Istoberfläche angepaßte, strömungstechnische Oberfläche gefertigt wird, **gekennzeichnet durch** die Kombination folgender Merkmale:
A) Die meßtechnische Erfassung der mindestens einen Istoberfläche (I 1 bis 6) und die Fertigung der mindestens einen, angepaßten Oberfläche (O 1, 0 3 bis 0 6) erfolgen auf einer Bearbeitungsmaschine bei gleichbleibender Aufspannung der Rotoreinheit (1, 2., 3), d.h. in einem zusammenhängenden Meß-, Berechnungs- und Bearbeitungszyklus,
B) die in radialer Richtung die Sollprofile in Sollage umschreibende Solloberfläche (S 3 bis S 7) jedes zu bearbeitenden Bereiches von der Schaufelspitze (12, 13) bis heran an die Nabe (4, 5, 6) wird in Form gespeicherter Daten für die Bearbeitungsmaschine verfügbar gemacht,
C) jeweils ausgehend von mindestens einer meßtechnisch erfaßten, in die Nähe der Fügezone (14 bis 17) reichenden, geometrisch zumeist toleranzbehafteten Istoberfläche (I 1 bis I 6) wird eine über die Fügezone (14 bis 17) hinweg verlaufende Oberfläche (O 1, O 3 bis O 6) nach folgenden Kriterien berechnet und **durch** Abtragen gefertigt:
a) die zu fertigende, strömungstechnische Oberfläche (O 1, O 3 bis O 6) grenzt an jeder Stelle tangential (möglichst mathematisch stetig), d.h. knickfrei und stufenlos in gerader und/oder gekrümmter Linie mit einer örtlich variabel vorgebbaren Mindestkrümmung an mindestens eine Istoberfläche (I 1 bis I 6) und/oder an eine zunächst theoretische Reparaturoberfläche (R), wobei letztere in örtlich variabel vorgebbarem Mindestabstand zu einer gemessenen Istoberfläche (I 4) innerhalb des Bauteils definiert und gefertigt wird,
b) die zu fertigende, strömungstechnische Oberfläche (O 1, O 3 bis O 6) entspricht bestmöglich einer mathematisch stetigen, räumlichen , wenigstens großteils gekrümmten Fläche mit einer an jeder Stelle örtlich und/oder richtungsabhängig variabel vorgebbaren Mindestkrümmung,
c) in jedem Bereich, wo die zu fertigende, strömungstechnische Oberfläche (O 1, O 3 bis O 6) aufgrund von a) und/oder b) und/oder örtlichem Bauteilabmaß nicht oder nicht vollständig der Solloberfläche (S 3 bis S 7), die in radialer Richtung die Sollprofile in Sollage umschreibt, entsprechen kann, wird die Oberfläche (O 1, O 3 bis O 6) in jeder radialen Höhe bestmöglich an das datentechnisch gespeicherte, örtliche Sollprofil angenähert, unter Beachtung mathematischer Stetigkeit.

2. Verfahren nach Anspruch 1, zur Benutzung im Rahmen einer Neuteilfertigung unter Verwendung von Schaufeln, deren strömungstechnische Gestalt vor dem Zusammenfügen mit der Nabe bereits großteils fertigbearbeitet worden ist, **dadurch gekennzeichnet, daß** je Schaufel (7) eine fertigbearbeitete Istoberfläche (I 3) radial außerhalb und nahe bei der Fügezone (14) meßtechnisch erfaßt wird (M 3), und daß von der gemessenen Istoberfläche (I 3) radial nach innen eine angepaßte, strömungstechnische Oberfläche (O 3) mit Übergang in die Solloberfläche (S 3) gefertigt wird.

3. Verfahren nach Anspruch 1, zur Benutzung im Rahmen einer Neuteilfertigung oder einer Reparatur mit Schaufelaustausch unter Verwendung von Schaufeln, deren strömungstechnische Gestalt vor dem Zusammenfügen mit der Nabe bereits großteils fertigbearbeitet worden ist, **dadurch gekennzeichnet, daß** jeweils eine fertigbearbeitete Istoberfläche (I 1) radial außerhalb und nahe bei der Fügezone (14) sowie eine Istoberfläche (I 2) zwischen Fügezone (14) und Nabe (4) meßtechnisch erfaßt werden (M 1, M 2), und daß zwischen diesen Istoberflächen (I 1, I 2) eine angepaßte, strömungstechnische Oberfläche (O 1) gefertigt wird.

4. Verfahren nach Anspruch 1 zur Benutzung im Rahmen einer Reparatur mit Schaufelaustausch unter Verwendung mindestens eines Teiles, dessen Gestalt gegenüber der strömungstechnischen Sollgestalt allseitig Übermaß aufweist, **dadurch gekennzeichnet, daß** jeweils eine Istoberfläche (I 4) zwischen Fügezone (15) und Nabe (5) meßtechnisch erfaßt wird (M 4), daß eine allseitig mit Abstand zur Istoberfläche (I 4) innerhalb des Bauteils liegende Reparaturoberfläche (R) definiert wird, daß von der Reparaturoberfläche (R) radial nach außen über eine möglichst geringe Höhe eine Oberfläche (O 4) mit Übergang in die Solloberfläche (S 4) gefertigt wird, daß die strömungstechnische Gestalt der Schaufel (8) durch allseitiges Abtragen weitestgehend als Solloberfläche (S 4) gefertigt wird, und daß die Reparaturoberfläche (R) zur Nabe (5) hin durch abtragende Fertigung erzeugt wird.

5. Verfahren nach Anspruch 1, zur Benutzung im Rahmen einer Reparatur mit Schaufelteilausstausch (Patchen) im Bereich der Ein- und/oder Austrittskante unter Verwendung mindestens eines Teiles (Patch), dessen Gestalt gegenüber der strömungstechnischen Sollgestalt allseitig Übermaß aufweist, **dadurch gekennzeichnet, daß** jeweils auf der Saug- und der Druckseite einer "gepatchten" Schaufel (9) die Istoberfläche (I 5) nahe der Fügezone (16)/Fügezonen meßtechnisch erfaßt wird (M 5), und daß in jeder von der Reparatur betroffenen, radialen Höhe der Schaufel (9) durch allseitiges Abtragen jedes ausgetauschten Teiles (18) das Istprofil (I 5) unter bestmöglicher Annäherung an das datentechnisch gespeicherte Sollprofil (S 5) vervollständigt wird.

6. Verfahren nach Anspruch 1, zur Benutzung im Rahmen einer Reparatur mit Materialauftrag im Bereich der gesamten Schaufelspitze unter Erzeugung eines Bereiches, dessen Gestalt gegenüber der strömungstechnischen Sollgestalt Übermaß aufweist, **dadurch gekennzeichnet, daß** radial innerhalb und nahe bei der Fügezone (17) einer betroffenen Schaufel die Istoberfläche (I 6) um die Schaufel (10) herum meßtechnisch erfaßt wird (M 6), und daß die Oberfläche (O 6) der Schaufel (10) durch Abtragen des Übermaßes ausgehend von der Istoberfläche (I 6) bis zur radialen Sollhöhe an der aufgetragenen Schaufelspitze (13) vervollständigt wird.

7. Verfahren nach einem der Ansprüche 1 bis 6, **dadurch gekennzeichnet, daß** das fertigungstechnische Abtragen des Bauteilwerkstoffes mechanisch/spanend, z.B. durch Schleifen oder Fräsen, insbesondere Hochgeschwindigkeitsfräsen, oder elektrisch bzw. elektrochemisch / spanlos, z.B. in EDM- oder ECM-Technik, erfolgt.

8. Verfahren nach einem der Ansprüche 1 bis 7, **dadurch gekennzeichnet, daß** die meßtechnische Oberflächenerfassung mit Bauteilkontakt, z.B. mittels Tastsensoren, oder kontaktlos, z.B. mittels optischer Sensoren, erfolgt.

## Claims

1. A process for the manufacture of tailored fluidic surfaces on integrally bladed rotor units, preferably of axial design, having a hub and having at least one blade ring, by machine removal following the joining by material bonding of least one blade and the hub and/or at least one blade part and at least one blade and/or following the local application of material by material bonding, at least one of these parts or the material applied being provided oversized, prior to removal wholly or partially in the area of the joint zone, in particular within the context of the manufacture of a new part and the repair of so-called "blisks" (bladed disks) and "blings" (bladed rings) for gas turbines, at least one actual surface describing the local component shape being measured using metrology techniques and one fluidic surfaces tailored to the actual surface which also shapes the joint zone in a manner favourable in terms of both fluidics and strength,
**characterised by**
the combination of the following features:
A) The measuring using metrology techniques of the at least one actual surface (I1 to I6) and the manufacture of the at least one tailored surface (O1, O3 to O6) are carried out on a forming machine with continual chucking of the rotor unit (1, 2, 3), i.e. in a combined measurement, calculation and processing cycle,
B) the reference surface (S3 to S7) radially describing the reference profile in the reference position of each area to be machined from the blade tip (12, 13) to the hub (4, 5, 6) is made available to the forming machine in the form of stored data,
C) starting from at least one actual surface (I1 to I6) measured using metrology techniques which extends into the vicinity of the joint zone (14 to 17) and is generally subject to geometrical tolerances, a surface (I1, O3 to O6) running past the joint zone (14 to 17) is calculated on the basis of the following criteria and manufactured by means of metal removal:
a) the fluidic surface (O1, O3 to O6) to be manufactured is tangentially contiguous with each point (where possible mathematically constantly), i.e. without kinks and continuously in a straight line and/or curved line with a locally variable predetermined minimum curve with at least one actual surface (I1 to I6) and/or with an initially theoretical repair surface (R), the latter being defined and manufactured at a locally variable predetermined minimum distance from a measured actual surface (I4) within the component,
b) the fluidic surface (O1, O3 to O6) to be manufactured corresponds as far as possible to a mathematically constant, spatial, at least largely curved surface with a locally and/or directionally variable predetermined minimum curve at each point,
c) in each area in which the fluidic surface (O1, O3 to O6) to be manufactured is unable due to a) and/or b) and/or local component variation to correspond or correspond completely to the reference surface (S3 to S7) which radially circumscribes the reference profile in the reference position, the surface (O1, O3 to O6) is approximated as well as possible at each radial height to the local reference profile stored using data processing techniques and taking into account mathematical constancy.

2. A process in accordance with claim 1 for use within the context of the manufacture of a new part using blades with a fluidic shape which is already largely finished before joining to the hub,
**characterised in that**
for each blade (7) a finished actual surface (I3) radially outside and in the vicinity of the joint zone (14) is measured using metrology techniques (M3) and a tailored fluidic surface (03) with a transition to the reference surface (S3) is manufactured radially inwards from the measured actual surface (I3).

3. A process in accordance with claim 1 for use within the context of the manufacture of a new part or a repair involving blade replacement using blades with a fluidic shape which is already largely finished before joining to the hub,
**characterised in that**
a finished actual surface (I1) radially outside and in the vicinity of the joint zone (14) and an actual surface (I2) between the joint zone (14) and the hub (4) are measured using metrology techniques and a tailored fluidic surface (O1) is manufactured between these actual surfaces (I1, I2).

4. A process in accordance with claim 1 for use within the context of a repair involving blade replacement using at least one part with a shape which is oversized on all sides in relation to the fluidic reference shape,
**characterised i n that**
an actual surface (I4) between the joint zone (15) and the hub (5) is measured using metrology techniques (M4), a repair surface (R) lying within the component at a distance from the actual surface (I4) on all sides is defined, a surface (04) with a transition to the reference surface (S4) is manufactured radially outwards from the repair surface (R) over as small a height as possible, the fluidic shape of the blade (8) is manufactured as far as possible as the reference surface (S4) by metal removal on all sides and the repair surface (R) towards the hub (5) is generated by metal removal.

5. A process in accordance with claim 1 for use within the context of a repair involving blade part replacement (patching) in the area of the leading and/or trailing edge using at least one part (patch) with a shape which is oversized on all sides in relation to the fluidic reference shape,
**characterised in that**
on both the intake and the pressure side of a "patched" blade (9) the actual surface (I5) in the vicinity of the joint zone(s) (16) is measured using metrology techniques (M5) and the actual surface (I5) is completed by making the best possible approximation to the reference profile (S5) stored using data processing techniques at each radial height of the blade (9) affected by the repair by the removal of metal from all sides of each replaced part (18).

6. A process in accordance with claim 1, for use within the context of a repair involving the application of material in the area of the entire blade tip thereby generating an area with a shape which is oversized in relation to the fluidic reference shape,
**characterised in that**
radially inside and in the vicinity of the joint zone (17) of an affected blade, the actual surface (16) around the blade (10) is measured using metrology techniques (M6) and the surface (06) of the blade (10) is completed starting from the actual surface (16) as far as the radial reference height on the applied blade tip (13) by removing the excess material.

7. A process in accordance with one of claims 1 to 6,
**characterised in that**
the removal of the component material using production engineering techniques is effected mechanically/by metal cutting, e.g. by grinding or milling, in particular high speed milling, or electrically and/or electrochemically/without cutting, e.g. using EDM or ECM technology.

8. A process in accordance with one of claims 1 to 7,
**characterised in that**
the measurement of the surface using metrology techniques is carried out either in contact with the component, e.g. by means of tactile sensors, or without contact, e.g. by means of optical sensors.

## Revendications

1. Procédé de fabrication de surfaces aérodynamiques adaptées à des unités de rotor à aubage intégral, de préférence dans un mode de construction axial avec un moyeu et au moins une couronne d'aubes, par enlèvement de matière mécanique après un assemblage par jonction de matière entre au moins une aube et le moyeu et/ou entre au moins une partie d'aube et au moins une aube et/ou après un dépôt de matière localisé par jonction de matière, au moins l'une de ces parties ou le dépôt de matière étant surdimensionné en totalité ou localement dans la zone de jonction avant l'enlèvement de matière, en particulier dans le cadre de la fabrication de pièces neuves et de la réparation des disques à pales, dits blisks (bladed disks) et des couronnes à pales, dites blings (bladed rings) pour turbines à gaz,'sachant qu'au moins une surface réelle, définissant la forme locale de la pièce, est déterminée par une technique de mesure, et qu'une surface aérodynamique, adaptée à la surface réelle, configurant la zone de jonction de manière avantageuse sur le plan de l'aérodynamisme et de la résistance, est réalisée, **caractérisé par** la combinaison des caractéristiques suivantes :
A) la détermination par une technique de mesure de la surface réelle (I1 à I6), au moins au nombre d'une, et la réalisation de la surface adaptée (O1, O3 à O6), au moins au nombre d'une, sont effectuées sur une machine d'usinage avec une fixation constante de l'unité de rotor (1, 2, 3), c'est-à-dire dans un cycle continu de mesure, de calcul et d'usinage ;
B) la surface théorique (S3 à S7), délimitant dans la direction radiale les profils théoriques dans la position théorique, de chaque zone à usiner à partir du sommet de l'aube (12, 13) jusque près du moyeu (4, 5, 6) est disponible sous forme de données enregistrées en mémoire pour la machine d'usinage ;
C) en partant respectivement d'une surface réelle (I1 à I6), déterminée par la technique de mesure, s'étendant jusqu'à proximité de la zone de jonction (14 à 17) et respectant au moins des tolérances géométriques, une surface (O1, O3 à O6), qui s'étend au-delà de la zone de jonction (14 à 17), est calculée selon les critères suivants et est réalisée par enlèvement de matière ;
a) la surface (O1, O3 à O6) aérodynamique à réaliser est contiguë tangentiellement (si possible mathématiquement continue) en chaque point, c'est-à-dire sans brisure et sans décrochement en ligne droite et/ou courbe avec une courbure minimum à prédéfinir de manière variable en fonction du lieu, avec au moins une surface réelle (I1 à I6) et/ou avec une surface de réparation (R) d'abord théorique, cette dernière étant définie et réalisée à l'intérieur de la pièce avec un écart minimum, à prédéfinir de manière variable en fonction du lieu, par rapport à une surface réelle (14) mesurée,
b) la surface (O1, O3 à O6) aérodynamique à réaliser correspond autant que possible à une surface mathématiquement continue, dans l'espace, au moins en grande partie courbe avec une courbure minimum à prédéfinir de manière variable en fonction du lieu et de la direction,
c) dans chaque zone, où la surface (O1, O3 à O6) aérodynamique à réaliser, compte tenu de a) et/ou de b) et/ou de la dimension locale de la pièce, ne peut pas ou ne peut pas totalement correspondre à la surface théorique (S3 à S7), qui délimite dans la direction radiale les profils théoriques dans la position théorique, la surface (O1, O3 à O6) dans chaque hauteur radiale est approchée autant que possible du profil théorique local enregistré avec les données techniques, en tenant compte de la continuité mathématique.

2. Procédé selon la revendication 1, destiné à être appliqué dans le cadre d'une fabrication de pièces neuves en utilisant des aubes dont la forme aérodynamique a déjà en grande partie était réalisée avant l'assemblage avec le moyeu, **caractérisé en ce que**, pour chaque aube (7), une surface réelle (I3) finie, radialement en dehors de la zone de jonction (14) et à proximité de celle-ci, est déterminée (M3) par une technique de mesure, et **en ce que**, à partir de la surface réelle (13) mesurée, est réalisée radialement vers l'intérieur une surface (O3) aérodynamique adaptée avec une transition vers la surface théorique (S3).

3. Procédé selon la revendication 1, destiné à être appliqué dans le cadre d'une fabrication de pièces neuves ou d'une réparation avec remplacement des aubes, en utilisant des aubes dont la forme aérodynamique a déjà en grande partie était réalisée avant l'assemblage avec le moyeu, **caractérisé en ce que**, dans chaque cas, une surface réelle (I1) finie, radialement en dehors de la zone de jonction (14) et à proximité de celle-ci, ainsi qu'une surface réelle (12), entre la zone de jonction (14) et le moyeu (4), sont déterminées (M1, M2) par une technique de mesure, et **en ce qu'**une surface (O1) aérodynamique adaptée est réalisée entre ces surfaces réelles (I1, I2).

4. Procédé selon la revendication 1, destiné à être appliqué dans le cadre d'une réparation avec remplacement des aubes, en utilisant au moins une pièce dont la forme est surdimensionnée sur tous les côtés par rapport à la forme théorique aérodynamique, **caractérisé en ce que**, dans chaque cas, une surface réelle (14), entre la zone de jonction (15) et le moyeu (5), est déterminée (M4) par une technique de mesure, **en ce qu'**il est défini une surface de réparation (R), située à l'intérieur de la pièce en s'écartant sur tous les côtés de la surface réelle (14), **en ce que**, à partir de la surface de réparation (R), radialement vers l'extérieur, est réalisée sur une hauteur si possible faible une surface (O4) avec une transition vers la surface théorique (S4), **en ce que** la forme aérodynamique de l'aube (8) est réalisée en grande partie sous forme de surface théorique (S4) par un enlèvement de matière sur tous les côtés, et **en ce que** la surface de réparation (R) vers le moyeu (5) est réalisée par un usinage par abrasion.

5. Procédé selon la revendication 1, destiné à être appliqué dans le cadre d'une réparation avec remplacement des aubes (par patch) dans la zone du bord d'attaque et/ou du bord de fuite, en utilisant au moins une pièce (patch) dont la forme est surdimensionnée sur tous les côtés par rapport à la forme théorique aérodynamique, **caractérisé en ce que**, dans chaque cas, sur le côté d'aspiration et le côté de pression d'une aube (9) « patchée », la surface réelle (I5) à proximité de la zone de jonction (16) ou des zones de jonction est déterminée (M5) par une technique de mesure, et **en ce que** dans chaque hauteur radiale de l'aube (9) concernée par la réparation, le profil réel (15) est achevé par un enlèvement de matière sur tous les côtés de chaque pièce remplacée (18) en s'approchant autant que possible du profil théorique (S5) enregistré dans les données techniques.

6. Procédé selon la revendication 1, destiné à être appliqué dans le cadre d'une réparation avec dépôt de matière dans la zone de l'ensemble du sommet de l'aube en réalisant une zone dont la forme est surdimensionnée par rapport à la forme théorique aérodynamique, **caractérisé en ce que**, radialement à l'intérieur et à proximité de la zone de jonction (17) d'une aube concernée, la surface réelle (16) autour de l'aube est déterminée (M6) par une technique de mesure, et **en ce que** la surface (O6) de l'aube (10) est achevée par l'enlèvement de matière du surdimensionnement à partir de la surface réelle (I6) jusqu'à la hauteur théorique radiale au niveau du sommet d'aube (13) obtenu par dépôt de matière.

7. Procédé selon l'une quelconque des revendications 1 à 6, **caractérisé en ce que** l'enlèvement de matière sur la pièce dans la technique de fabrication est réalisé mécaniquement par enlèvement de copeaux, par exemple par un dressage à la meule ou un fraisage, en particulier un fraisage à grande vitesse, ou électriquement ou voie électrochimique sans formation de copeaux, par exemple par la technique d'usinage par électroérosion ou la technique d'usinage par électrochimie.

8. Procédé selon l'une quelconque des revendications 1 à 7, **caractérisé en ce que** la détermination de la surface par mesure est effectuée par contact avec la pièce, par exemple au moyen de palpeurs, ou sans contact, par exemple au moyen de capteurs optiques.
